# FASCICULE DE BREVET EUROPEEN

(11) **EP 4 112 394 B1**
(45) Date de publication et mention de la délivrance du brevet: **20.12.2023**
(21) Numéro de dépôt: 22181279.5
(22) Date de dépôt: 27.06.2022
(51) Int. Cl.: B60R 21/207, B60R 21/231

(54) **DOSSIER DE SIÈGE COMPRENANT UN MODULE DE COUSSIN GONFLABLE EXTÉRIEUR**
SITZRÜCKENLEHNE MIT EINEM ÄUSSEREN AUFBLASBAREN KISSENMODUL
SEAT BACKREST COMPRISING AN EXTERNAL AIRBAG MODULE

(30) Priorité: 29.06.2021 FR 2106975
(43) Date de publication de la demande: 04.01.2023
(73) Titulaire: FAURECIA Sièges d'Automobile, 92000 Nanterre (FR)
(72) Inventeur: PIEDERRIERE, Jean-Yves, 91670 ANGERVILLE (FR); CLUET, Mathieu, 91150 ETAMPES (FR); GAZANIOL, Benoit, 91290 ARPAJON (FR); CHARRAS, Fabrice, 92120 MONTROUGE (FR)
(74) Mandataire: Lavoix

(56) Documents cités:
- EP-A1- 0 861 761
- DE-A1- 19 853 469
- DE-A1-102004 059 277
- JP-A- H10 166 986
- JP-A- 2000 289 510
- JP-A- 2003 182 425
- JP-A- 2004 017 927
- JP-A- 2015 058 884
- JP-B2- 3 794 306
- US-A1- 2015 076 885

## Description

La présente invention concerne un dossier de siège, du type comprenant une armature et une coiffe s'étendant autour d'au moins une partie de l'armature, ladite coiffe définissant au moins une partie de la surface extérieure du dossier, un module de coussin gonflable, comprenant un logement recevant un coussin gonflable, étant fixé sur ladite armature dans une zone de fixation.

JP 3 794306 divulgue un tel dossier de siège selon le préambule de la revendication 1.

Un tel dossier comprend généralement un corps en mousse monté sur une armature interne, une coiffe enrobant le corps en mousse et définissant la surface extérieure visible du l'dossier. Un module de coussin gonflable latéral peut être intégré dans le corps en mousse et agencé pour se déployer sur un côté du siège. Le logement du module de coussin gonflable est généralement fixé sur l'armature et une couche de mousse issue du corps recouvre le logement, cette couche de mousse étant elle-même recouverte par la coiffe.

Un tel agencement permet d'intégrer de façon harmonieuse le module de coussin gonflable dans le siège, celui-ci n'étant pas visible sous la coiffe et n'altérant pas le toucher du siège grâce à la couche de mousse s'étendant entre le logement et la coiffe.

Cependant, un tel dossier nécessite une grande quantité de matériau, notamment de mousse pour enrober l'armature, ce qui augmente l'encombrement, la masse et les coûts de fabrication du dossier et également la consommation de CO₂. En outre, des mesures particulières doivent être prises pour permettre le déploiement du coussin gonflable vers l'extérieur du siège, telles que l'ajout d'une zone de rupture dans la couche de mousse et d'une zone de déchirement dans la coiffe en regard du logement.

L'un des buts de l'invention est de pallier ces inconvénients en proposant un dossier de siège nécessitant moins de matériaux et dont le déploiement du coussin gonflable est facilité.

A cet effet, l'invention concerne un dossier du type précité, dans lequel, au moins dans la zone de fixation, la coiffe est en contact direct avec l'armature et s'étend entre ladite armature et le logement du module de coussin gonflable, ledit logement étant fixé à l'armature au travers de la coiffe et s'étendant entièrement du côté de la surface extérieure du dossier.

En prévoyant une coiffe s'étendant directement sur l'armature et un module de coussin gonflable s'étendant à l'extérieur de la coiffe, la quantité de mousse utilisée dans le dossier peut être réduite puisqu'aucune couche de mousse n'est prévue au moins dans la zone de fixation. En outre, le déploiement du coussin gonflable est facilité puisque le logement débouche directement sur l'extérieur du dossier. Il n'est donc pas nécessaire de prévoir d'agencement particulier de la coiffe dans la zone de fixation pour permettre ce déploiement.

Le dossier selon l'invention peut en outre comprendre une ou plusieurs des caractéristiques suivantes, considérées isolément ou selon toute combinaison techniquement envisageable :
- le logement du module de coussin gonflable est un boîtier comprenant une partie de boîtier interne et une partie de boîtier externe, la partie de boîtier interne étant fixée sur l'armature dans la zone de fixation et la partie de boîtier externe étant montée sur la partie de boîtier interne, la partie de boîtier interne et la partie de boîtier externe définissant entre elles un volume de réception du coussin gonflable ;
- la partie de boîtier externe comprend au moins un volet déplaçable entre une position fermée, dans laquelle le volet ferme le volume de réception du coussin gonflable, et une position ouverte, dans laquelle le volet libère un passage vers l'extérieur du dossier pour le déploiement du coussin gonflable ;
- l'armature forme un cadre délimité par au moins deux branches opposées, ledit cadre définissant une face externe et une face interne s'étendant de part et d'autre de l'armature, la coiffe étant en contact direct avec une partie des deux branches opposées de l'armature et étant tendue autour des deux branches du côté de la face externe ;
- un corps en mousse est monté sur l'armature du côté de la face interne, la coiffe s'étendant sur ledit corps en mousse ;
- la zone de fixation s'étend sur une paroi principale de l'une des branches du cadre, ladite paroi principale s'étendant entre la face externe et la face interne du cadre ;
- le logement du module de coussin gonflable est fixé à l'armature par au moins un élément de fixation, ledit élément de fixation comprenant une tige, en particulier filetée, s'étendant entre le logement et l'armature en passant au travers de la coiffe, ladite tige étant fixée à l'armature ;
- la coiffe est maintenue sur l'armature dans la zone de fixation par compression entre le logement du module de coussin gonflable et l'armature de sorte que la coiffe n'est pas fixée directement au logement ;
- le logement du module de coussin gonflable est fixé à l'armature par un unique élément de fixation comprenant une tige recevant à une extrémité dans le logement le coussin gonflable et recevant à son autre extrémité du côté de l'armature un boulon ;
- la coiffe est en contact directe avec le logement, en particulier sur toute la longueur du logement selon une direction longitudinale.

Selon un autre aspect, l'invention concerne également un siège de véhicule comprenant un tel dossier.

D'autres aspects et avantages de l'invention apparaîtront à la lecture de la description qui suit, donnée à titre d'exemple et faite en référence aux dessins annexés, dans lesquels :
- la Fig. 1 est une représentation schématique en perspective d'un siège comprenant un dossier selon l'invention,
- la Fig. 2 est une représentation schématique en coupe d'un dossier selon l'invention, et
- la Fig. 3 est une représentation schématique en coupe d'une partie du dossier de la Fig. 2.

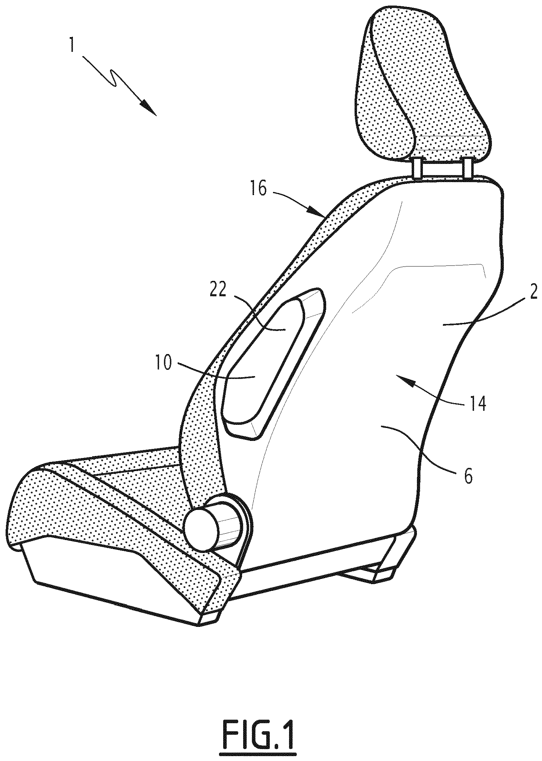

En référence à la Fig. 1, on décrit un siège de véhicule 1, tel qu'un siège de véhicule automobile, comprenant au moins un dossier 2.

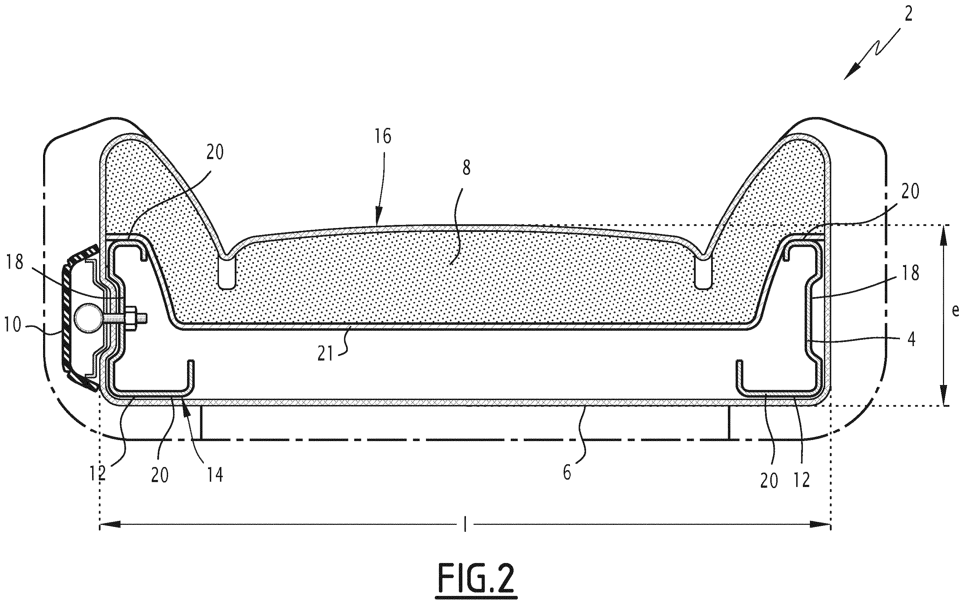

Comme représenté sur la Fig. 2, le dossier 2 comprend une armature 4, une coiffe 6, un corps en mousse 8 et un module de coussin gonflable 10.

L'armature 4 est par exemple formée par des profilés métalliques assemblés entre eux et forme un cadre de support des autres éléments du dossier de siège 2. A cet effet, l'armature 4 comprend au moins deux branches 12 s'étendant selon la direction d'élévation du dossier 2, correspondant à la hauteur de celui-ci. Les branches 12 sont espacées l'une de l'autre selon une direction transversale sensiblement perpendiculaire à la direction d'élévation et correspondant à la largeur l du dossier 2, comme représenté sur la Fig. 2. De façon connue, les branches 12 sont par exemple reliées l'une à l'autre par une traverse inférieure et une traverse supérieure (non représentées) s'étendant selon la direction transversale aux extrémités inférieures et supérieures des branches 12 et écartées l'une de l'autre selon la direction d'élévation.

L'armature 4 définit une face externe 14 et une face interne 16 s'étendant de part et d'autre du cadre selon une direction longitudinale sensiblement perpendiculaire à la direction d'élévation et à la direction transversale et correspondant à l'épaisseur e du dossier 2, comme représenté sur la Fig. 2. La face externe 14 correspond par exemple au dos du dossier, tourné vers l'arrière du véhicule lorsque le siège fait face à l'avant du véhicule, et la face interne 16 s'étend par exemple du côté de la surface de réception d'un passager, sur laquelle le dos d'un passager prend appui lorsqu'il est assis sur le siège.

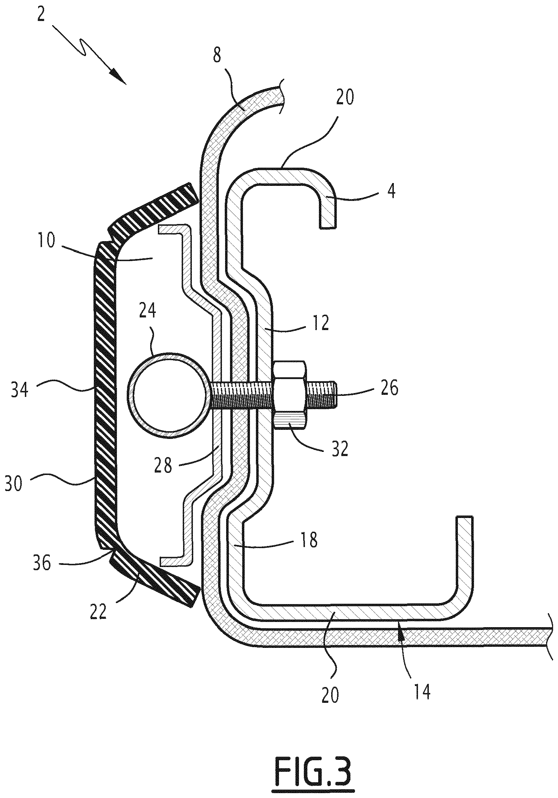

Selon le mode de réalisation représenté sur les Figs. 2 et 3, chaque branche 12 présente une section en forme de U et comprend une paroi principale 18 formant la base du U et deux parois latérales 20 formant les branches du U et s'étendant de part et d'autre de la paroi principale 18. La paroi principale 18 s'étend selon la direction longitudinale entre les faces externe 14 et interne 16 de l'armature 4 tandis que l'une des paroi latérale 20 forme un bord de la face externe 14 et l'autre paroi latérale 20 forme un bord de la face interne 16 selon la direction transversale. Les cavités des branches 12, définies pour chaque branche 12 par la paroi principale 18 et les parois latérales 20 de celle-ci, sont tournées l'une vers l'autre. En d'autres termes, les parois principales 18 des branches 12 forment les bords de- l'armature selon la direction transversale.

L'armature 4 forme une structure de support des autres pièces du dossier. C'est-à-dire que les autres pièces, telles que le corps en mousse 8, la coiffe 6 et le module de coussin gonflable 10, sont montés sur l'armature 4. D'autres pièces peuvent être montées sur l'armature 4, telles qu'un appui-tête et un système de liaison articulé à l'assise du siège.

Le corps en mousse 8 est fixé sur l'armature 4 du côté de la face interne 16 de celle-ci, comme plus particulièrement visible sur la Fig. 2. Plus particulièrement le corps en mousse 8 est monté en appui sur une nappe de déflexion 21 formée par exemple par des lattes métalliques et montée sur l'armature 4 entre les branches 12 du côté de la face interne 16 de l'armature. Le corps en mousse 8 forme une matelassure adaptée à la réception du passager lorsque celui-ci est assis sur le siège. A cet effet, le corps en mousse 8 peut présenter toute forme adaptée pour le confort du passager. Le corps en mousse 8 recouvre par exemple tout le cadre formé par l'armature 4 du côté de la face interne 16, tandis que la face externe 14 n'est pas recouverte par le corps en mousse 8. Le corps en mousse 8 est par exemple fixé sur les branches 12 de sorte à recouvrir les parois latérales 20 s'étendant du côté de la face interne 16. Pour chaque branche 12, le corps en mousse 8 peut éventuellement s'étendre sur une partie de la paroi principale 18 adjacente à la paroi latérale 20 du côté de la face interne 16, mais la majeure partie de la paroi principale 18 est avantageusement dépourvue de mousse, comme représenté sur la Fig. 2.

Ainsi, du côté de la face externe 14 et sur les côtés du dossier 2, le dossier 2 est dépourvu de corps en mousse, ce qui permet de réduire l'encombrement du dossier 2 et de réduire la quantité de matériau nécessaire pour réaliser le dossier 2 et la surface de la coiffe 6 enrobant le dossier 1, comme cela sera décrit ultérieurement. Sur la Fig. 2, on a représenté en pointillés les parties du corps en mousse habituellement prévues sur un dossier de l'art antérieur. Comme on peut le constater, la largeur l du dossier 2 selon l'invention selon la direction transversale est réduite par rapport à celle du dossier de l'art antérieur. Plus particulièrement, une réduction de largeur de l'ordre de 40 à 60 mm peut être obtenue. De même, l'épaisseur e du dossier 2 selon l'invention selon la direction longitudinale est réduite par rapport à celle du dossier de l'art antérieur. Plus particulièrement, une réduction d'épaisseur de l'ordre de 10 à 30 mm, par exemple 15 mm, peut être obtenue.

La coiffe 6 recouvre l'armature 4 et le corps en mousse 8 de sorte à former la surface extérieure du dossier 2, c'est-à-dire la partie visible du dossier 2 depuis l'habitacle du véhicule. La coiffe 6 confère donc son aspect et son toucher au dossier 2 et peut ainsi être réalisée en tout matériau adapté à cet effet. La coiffe peut être réalisée matériau textile ou en peau en matériau naturel, tel que du cuir, ou synthétique.

Comme représenté sur la Fig. 2, du côté de la face interne 16, la coiffe s'étend sur et recouvre le corps en mousse 8. De façon connue, la coiffe 6 est notamment fixée au corps en mousse 8par des moyens de rappel. Dans les zones de l'armature 4 dépourvues de corps en mousse, la coiffe 6 est en contact direct l'armature 4. Par « contact direct », on entend qu'il n'y a pas de couche intermédiaire s'étendant entre la coiffe 6 et l'armature 4. Plus particulièrement, comme représenté sur la Fig. 3, la coiffe 6 est en contact direct avec la majeure partie des parois principales 18 et sur les parois latérales 20 du côté de la surface externe 14 des branches 12 de l'armature 4. En d'autres termes, sur les côtés et sur la face externe 14, la coiffe 6 est tendue directement autour du cadre formé par l'armature 4, notamment autour des deux branches 12, comme visible en traits pleins sur la Fig. 2. Selon un mode de réalisation, la coiffe 6 est en contact direct avec les parois principales 18 des deux branches 12 sur toute la longueur des parois principales 18, mesurée selon la direction longitudinale.

Une zone de fixation est prévue sur au moins l'une des branches 12 de l'armature 4 pour la fixation du module de coussin gonflable 10. La zone de fixation s'étend plus particulièrement sur une partie de la paroi principale 18 de la branche 12 à l'endroit prévu pour le déploiement d'un coussin gonflable latéral. Le module de coussin gonflable 10 est donc fixé sur l'armature 4 dans la zone de fixation. La fixation entre le module de coussin gonflable 10 sur l'armature 4 se fait au travers de la coiffe 6 de sorte que le module de coussin gonflable 10 s'étend entièrement du côté de la surface extérieure du dossier 2, définie par la coiffe 6, comme représenté sur les Figs. 1 à 3. On notera qu'il n'y a pas de fixation directe entre la coiffe 6 et le module de coussin gonflable 10, comme cela sera décrit plus en détail ultérieurement.

Le module de coussin gonflable 10 comprend un logement 22 recevant un coussin gonflable 24 à l'état replié (non représenté). Le logement 22 est fixé à l'armature 4 par au moins un élément de fixation 26 s'étendant au travers de la coiffe 6, comme représenté sur la Fig. 3.

Selon un mode de réalisation, le logement 22 est formé par un boîtier, par exemple en matériau plastique rigide. Plus particulièrement, le boîtier est par exemple formé par une partie de boîtier interne 28 et une partie de boîtier externe 30 délimitant entre elles un volume de réception du coussin gonflable 24. Comme représenté sur la Fig. 3, la partie de boîtier interne 28 est fixée sur l'armature par l'élément de fixation 26 et la partie de boîtier externe 30 est fixée sur la partie de boîtier interne 28. L'élément de fixation 26 comprend une tige fixée à la partie de boîtier interne 28, traversant la coiffe 6 et la paroi principale 18 d'une branche 12 dans la zone de fixation et étant par exemple boulonnée à l'armature 4 à une extrémité de la tige par un boulon 32. L'autre extrémité de la tige s'étendant dans le volume interne du logement reçoit par exemple le coussin gonflable 24. La partie de boîtier externe 30 est montée sur la partie de boîtier interne 28, par exemple par clipsage sur la partie de boîtier interne 28. Il est entendu que plusieurs éléments de fixation 26 peuvent être prévus, notamment en fonction des dimensions du logement 22. Cependant, selon un mode de réalisation, le logement 22 est fixé à l'armature par un unique élément de fixation 26. En variante, le logement 22 est formé par un sac flexible, par exemple réalisé en tissu.

Dans la zone de fixation, la coiffe 6 est en contact direct avec le logement 22, par exemple sur toute la longueur de celui-ci, mesurée selon la direction longitudinale. Dans la zone de fixation, le coiffe 6 est ainsi maintenue sur l'armature par compression entre le logement 22 et l'armature 4. En d'autres termes, dans la zone de fixation, la coiffe 6 est prise en sandwich entre la partie interne 28 du logement 22 et la paroi principale 18 de la branche 12 de sorte qu'il n'est pas nécessaire de prévoir de fixation entre la coiffe 6 et le logement 22 du module de coussin gonflable 10.

Dans le cas d'un logement 22 formé par un boîtier en deux parties, le déploiement du coussin gonflable 24 vers l'extérieur se fait au travers de la partie de boîtier externe 30. A cet effet, la partie de boîtier externe 30 comprend au moins un volet 34 déplaçable entre une position fermée, dans laquelle le volet 34 ferme le volume de réception du coussin gonflable 24, et une position ouverte (non représentée), dans laquelle le volet 34 libère un passage vers l'extérieur du dossier 2 pour le déploiement du coussin gonflable 24. Le volet 34 est par exemple venu de matière avec le reste de la partie de boîtier externe 30 par l'intermédiaire d'au moins une ligne de rupture 36 agencée pour se rompre et permettre le déplacement du volet 34 vers la position ouverte sous l'effet de la force générée par le déploiement du coussin gonflable 24. La ligne de rupture 36 est par exemple formée par un affaiblissement de matière dans la partie de boîtier externe 30. Dans le cas d'un sac flexible, la ligne de rupture est par exemple une ligne de déchirure du sac flexible.

Comme le module de coussin gonflable 10 s'étend entièrement à l'extérieur de la coiffe 6, il n'est pas nécessaire de prévoir de ligne de rupture dans la coiffe 6 ou dans le corps en mousse, comme c'est habituellement le cas pour ce type de module de coussin gonflable. Ainsi, le déploiement du coussin gonflable 24 est plus simple et ne dépend pas de la nature de la coiffe 6. En outre, la fabrication du dossier 2 est également simplifiée.

Le dossier selon l'invention permet de réaliser des économies de matériau et de simplifier la réalisation du dossier 2. Il est entendu que ce résultat peut être atteint dès lors que la coiffe 6 est appliquée directement sur l'armature, au moins dans la zone de fixation du module de coussin gonflable 10, de sorte à s'étendre entre le logement 22 du module de coussin gonflable 10 et l'armature 4 dans la zone de fixation. Ainsi, le corps en mousse 8 peut s'étendre au-delà de la face interne 14 de l'armature, par exemple sur une partie de la paroi principale 18 adjacente à la paroi latérale 20 du côté de la face interne, tant qu'il ne s'étend pas sur la zone de fixation.

Le dossier 2 selon l'invention conserve un aspect et un toucher satisfaisant. A cet effet, le logement 22 du module de coussin gonflable 10 qui est visible puisqu'il s'étend du côté de la surface extérieure de la coiffe 6 peut être conformé pour conférer un aspect particulier au dossier 2. Le fait de prévoir le module de coussin gonflable 10 à l'extérieur permet de simplifier le déploiement du coussin gonflable 24 et d'assurer ainsi un bon fonctionnement de celui-ci.

## Revendications

1. Dossier (2) de siège comprenant une armature (4) et une coiffe (6) s'étendant autour d'au moins une partie de l'armature (4), ladite coiffe (6) définissant au moins une partie de la surface extérieure du dossier, un module de coussin gonflable (10), comprenant un logement (22) recevant un coussin gonflable (24), étant fixé sur ladite armature (4) dans une zone de fixation, la coiffe (6) s'étendant, au moins dans la zone de fixation, entre ladite armature (4) et le logement (22) du module de coussin gonflable (10), ledit logement (22) étant fixé à l'armature (4) au travers de la coiffe (6) et s'étendant entièrement du côté de la surface extérieure du dossier, **caractérisé en ce que**, au moins dans la zone de fixation, la coiffe (6) est en contact direct avec l'armature (4).

2. Dossier de siège selon la revendication 1, dans lequel le logement (22) du module de coussin gonflable (10) est un boîtier comprenant une partie de boîtier interne (28) et une partie de boîtier externe (30), la partie de boîtier interne (28) étant fixée sur l'armature (4) dans la zone de fixation et la partie de boîtier externe (30) étant montée sur la partie de boîtier interne (28), la partie de boîtier interne (28) et la partie de boîtier externe (30) définissant entre elles un volume de réception du coussin gonflable (24).

3. Dossier de siège selon la revendication 2, dans lequel la partie de boîtier externe (30) comprend au moins un volet (34) déplaçable entre une position fermée, dans laquelle le volet (34) ferme le volume de réception du coussin gonflable (24), et une position ouverte, dans laquelle le volet (34) libère un passage vers l'extérieur du dossier pour le déploiement du coussin gonflable (24).

4. Dossier de siège selon l'une quelconque des revendications 1 à 3, dans lequel l'armature (4) forme un cadre délimité par au moins deux branches (12) opposées, ledit cadre définissant une face externe (14) et une face interne (16) s'étendant de part et d'autre de l'armature (4), la coiffe (6) étant en contact direct avec une partie des deux branches (12) opposées de l'armature (4) et étant tendue autour des deux branches (12) du côté de la face externe (14).

5. Dossier de siège selon la revendication 4, dans lequel un corps en mousse (8) est monté sur l'armature (4) du côté de la face interne (16), la coiffe (6) s'étendant sur ledit corps en mousse (8).

6. Dossier de siège selon la revendication 4 ou 5, dans lequel la zone de fixation s'étend sur une paroi principale (18) de l'une des branches (12) du cadre, ladite paroi principale (18) s'étendant entre la face externe (14) et la face interne (16) du cadre.

7. Dossier de siège selon l'une quelconque des revendications 1 à 6, dans lequel le logement (22) du module de coussin gonflable (10) est fixé à l'armature par au moins un élément de fixation (26), ledit élément de fixation (26) comprenant une tige, en particulier filetée, s'étendant entre le logement (22) et l'armature (4) en passant au travers de la coiffe (6), ladite tige étant fixée à l'armature (4).

8. Dossier de siège selon la revendication 7, dans lequel la coiffe (6) est maintenue sur l'armature dans la zone de fixation par compression entre le logement (22) du module de coussin gonflable et l'armature (4) de sorte que la coiffe (6) n'est pas fixée directement au logement (22).

9. Dossier de siège selon la revendication 7 ou 8, dans lequel le logement (22) du module de coussin gonflable est fixé à l'armature par un unique élément de fixation (26) comprenant une tige recevant à une extrémité dans le logement (22) le coussin gonflable (24) et recevant à son autre extrémité du côté de l'armature (4) un boulon.

10. Dossier de siège selon l'une quelconque des revendications 1 à 9, dans lequel la coiffe (6) est en contact directe avec le logement (22), en particulier sur toute la longueur du logement selon une direction longitudinale.

## Patentansprüche

1. Sitzlehne (2), umfassend einen Rahmen (4) und eine Abdeckung (6), die sich um mindestens einen Abschnitt des Rahmens (4) herum erstreckt, wobei die Abdeckung (6) mindestens einen Abschnitt der Außenoberfläche der Rückenlehne definiert, ein Airbagmodul (10), umfassend eine Aussparung (22), die einen Airbag (24) aufnimmt, der an dem Rahmen (4) in einer Befestigungsregion befestigt ist, wobei sich die Abdeckung (6) mindestens in der Befestigungsregion zwischen dem Rahmen (4) und der Aussparung (22) des Airbagmoduls (10) erstreckt, wobei die Aussparung (22) an dem Rahmen (4) durch die Abdeckung (6) befestigt ist und sich vollständig von der Seite der Außenoberfläche der Rückenlehne erstreckt, **dadurch gekennzeichnet, dass** mindestens in der Befestigungsregion die Abdeckung (6) in direktem Kontakt mit dem Rahmen (4) ist.

2. Sitzlehne nach Anspruch 1, wobei die Aussparung (22) des Airbagmoduls (10) ein Gehäuse ist, umfassend einen inneren Gehäuseabschnitt (28) und einen äußeren Gehäuseabschnitt (30), wobei der innere Gehäuseabschnitt (28) an dem Rahmen (4) in der Befestigungsregion befestigt ist, und der äußere Gehäuseabschnitt (30) an dem inneren Gehäuseabschnitt (28) montiert ist, wobei der innere Gehäuseabschnitt (28) und der äußere Gehäuseabschnitt (30) zwischen ihnen ein Aufnahmevolumen des Airbags (24) definieren.

3. Sitzlehne nach Anspruch 2, wobei der äußere Gehäuseabschnitt (30) mindestens eine Klappe (34) umfasst, die zwischen einer geschlossenen Position, in der die Klappe (34) das Volumen zum Aufnehmen des Airbags (24) verschließt, und einer offenen Position, in der die Klappe (34) einen Durchgang zu der Außenseite der Rückenlehne zum Entfalten des Airbags (24) freigibt, bewegbar ist.

4. Sitzlehne nach einem der Ansprüche 1 bis 3, wobei der Rahmen (4) eine Rahmenstruktur ausbildet, die durch mindestens zwei gegenüberliegende Arme (12) begrenzt ist, wobei die Rahmenstruktur eine Außenoberfläche (14) und eine Innenoberfläche (16) definiert, die sich auf jeder Seite des Rahmens (4) erstrecken, wobei die Abdeckung (6) in direktem Kontakt mit einem Abschnitt der zwei gegenüberliegenden Arme (12) des Rahmens (4) steht und straff um die zwei Arme (12) auf der Seite der Außenoberfläche (14) ist.

5. Sitzlehne nach Anspruch 4, wobei ein Schaumkörper (8) auf dem Rahmen (4) auf der Seite der Innenoberfläche (16) montiert ist, wobei sich die Abdeckung (6) über den Schaumkörper (8) erstreckt.

6. Sitzlehne nach Anspruch 4 oder 5, wobei sich die Befestigungsregion über eine Hauptwand (18) eines der Arme (12) des Rahmens erstreckt, wobei sich die Hauptwand (18) zwischen der Außenoberfläche (14) und der Innenoberfläche (16) des Rahmens erstreckt.

7. Sitzlehne nach einem der Ansprüche 1 bis 6, wobei die Aussparung (22) des Airbagmoduls (10) an dem Rahmen durch mindestens ein Befestigungselement (26) befestigt ist, das Befestigungselement (26) umfassend einen Stab, insbesondere einen Gewindestab, der sich zwischen der Aussparung (22) und dem Rahmen (4) durch Hindurchführen durch die Abdeckung (6) erstreckt, wobei der Stab an dem Rahmen (4) befestigt ist.

8. Sitzlehne nach Anspruch 7, wobei die Abdeckung (6) auf dem Rahmen in der Befestigungsregion durch Kompression zwischen der Aussparung (22) des Airbagmoduls und dem Rahmen (4) derart gehalten wird, dass die Abdeckung (6) nicht direkt an der Aussparung (22) befestigt ist.

9. Sitzlehne nach Anspruch 7 oder 8, wobei die Aussparung (22) des Airbagmoduls an dem Rahmen durch ein einzelnes Befestigungselement (26) befestigt ist, umfassend einen Stab, der den Airbag (24) an einem Ende in der Aussparung (22) aufnimmt und einen Bolzen an seinem anderen Ende auf der Seite des Rahmens (4) aufnimmt.

10. Sitzlehne nach einem der Ansprüche 1 bis 9, wobei die Abdeckung (6) in direktem Kontakt mit der Aussparung (22) steht, insbesondere über die gesamte Länge der Aussparung in einer Längsrichtung.

## Claims

1. Seat backrest (2) comprising a frame (4) and a cover (6) extending around at least one portion of the frame (4), said cover (6) defining at least one portion of the outer surface of the backrest, an airbag module (10), comprising a recess (22) which receives an airbag (24), being fastened to said frame (4) in a fastening region, the cover (6) extending, at least in the fastening region, between said frame (4) and the recess (22) of the airbag module (10), said recess (22) being fastened to the frame (4) through the cover (6) and extending entirely from the side of the outer surface of the backrest, **characterized in that,** at least in the fastening region, the cover (6) is in direct contact with the frame (4).

2. Seat backrest according to claim 1, wherein the recess (22) of the airbag module (10) is a housing comprising an inner housing portion (28) and an outer housing portion (30), the inner housing portion (28) being fastened to the frame (4) in the fastening region and the outer housing portion (30) being mounted on the inner housing portion (28), the inner housing portion (28) and the outer housing portion (30) defining between them a receiving volume of the airbag (24).

3. Seat backrest according to claim 2, wherein the outer housing portion (30) comprises at least one flap (34) which is movable between a closed position, in which the flap (34) closes the volume for receiving the airbag (24), and an open position, in which the flap (34) releases a passage toward the outside of the backrest for deployment of the airbag (24).

4. Seat backrest according to any of claims 1 to 3, wherein the frame (4) forms a framework delimited by at least two opposite arms (12), said framework defining an outer surface (14) and an inner surface (16) which extend on either side of the frame (4), the cover (6) being in direct contact with a portion of the two opposite arms (12) of the frame (4) and being taut around the two arms (12) on the side of the outer surface (14).

5. Seat backrest according to claim 4, wherein a foam body (8) is mounted on the frame (4) on the side of the inner surface (16), the cover (6) extending over said foam body (8).

6. Seat backrest according to either claim 4 or claim 5, wherein the fastening region extends over a main wall (18) of one of the arms (12) of the frame, said main wall (18) extending between the outer surface (14) and the inner surface (16) of the frame.

7. Seat backrest according to any of claims 1 to 6, wherein the recess (22) of the airbag module (10) is fastened to the frame by at least one fastening element (26), said fastening element (26) comprising a rod, in particular a threaded rod, which extends between the recess (22) and the frame (4) by passing through the cover (6), said rod being fastened to the frame (4).

8. Seat backrest according to claim 7, wherein the cover (6) is held on the frame in the fastening region by compression between the recess (22) of the airbag module and the frame (4) such that the cover (6) is not fastened directly to the recess (22).

9. Seat backrest according to either claim 7 or claim 8, wherein the recess (22) of the airbag module is fastened to the frame by a single fastening element (26) comprising a rod which receives the airbag (24) at one end in the recess (22) and receives a bolt at its other end on the side of the frame (4).

10. Seat backrest according to any of claims 1 to 9, wherein the cover (6) is in direct contact with the recess (22), in particular over the entire length of the recess in a longitudinal direction.
